# EUROPEAN PATENT SPECIFICATION

(11) **EP 2 493 289 B1**
(45) Date of publication and mention of the grant of the patent: **03.06.2015**
(21) Application number: 10771868.6
(22) Date of filing: 26.10.2010
(51) Int. Cl.: A01P 1/00, A46B 9/04, A46D 1/00, A01N 59/16, C08J 3/20, C08K 3/00, C08G 69/26, C08L 77/06, D01F 1/10, C08L 77/00

(54) **ANTIMICROBIAL COMPOSITION, ANTIMICROBIAL BRUSH FILAMENTS AND PREPARATION METHOD THEREOF**
MIKROBIOZIDE ZUSAMMENSETZUNG, ANTIMIKROBIELLE FASERN UND DAS VERFAHREN ZU IHRER HERSTELLUNG
COMPOSITION ANTIMICROBIENNE, FILAMENTS DE BROSSES ANTIMICROBIENNES ET LEUR PROCÉDÉ DE FABRICATION

(30) Priority: 26.10.2009 CN 200910207081
(43) Date of publication of application: 05.09.2012
(73) Proprietor: E. I. du Pont de Nemours and Company, Wilmington, DE 19898 (US); Dupont Xingda Filaments Company Limited, Huishan Distr., Wuxi Jiangsu 214183 (CN)
(72) Inventor: WANG, Mingsong, jiangsu 214283 (CN); LIU, Xianqiao, shanghai 201203 (CN)
(74) Representative: Dannenberger, Oliver Andre
(86) International application number: PCT/US2010/054029
(87) International publication number: WO 2011/056536

(56) References cited:
- EP-A1- 0 444 939
- EP-A1- 2 208 420
- EP-A2- 0 678 548
- WO-A1-01/38615
- US-A- 5 290 544
- US-A1- 2008 051 493

## Description

### FIELD OF THE INVENTION

The present invention relates generally to brush filaments for making toothbrushes, cosmetic brushes, paintbrushes and other brushes for civilian or industrial applications and preparation method of such filaments, and particularly, to antimicrobial brush filaments for making toothbrushes, cosmetic brushes, paintbrushes and other brushes for civilian or industrial applications and preparation method of such filaments.

### BACKGROUND OF THE INVENTION

Usually, brush filaments used for making various types of brushes are made from synthetic materials and animal hairs. For example, nylon 66, nylon 610 and nylon 612 are often used for making toothbrush filaments. Besides, polyester such as PET, PTT and PBT are also used for making toothbrush filaments for toothbrushes.

However, these brush filaments themselves do not have antimicrobial activity. After a person uses a toothbrush and sets it aside, bacteria and Candida albicans fungus could cause odor in and from the mouth, and/or would grow on the surface of the brush filaments. When the toothbrush is used thereafter, these bacteria would be directly introduced into the mouth, which is inimical to maintaining oral hygiene, particularly if there to be a wound, in the mouth. Scientists have found more than 10,000,000 bacteria living on a single toothbrush. This huge number does not vary greatly, as reported on June 8th, 2009, By *Dental Health Magazine.*

In order for the current brush filament materials to possess antimicrobial and hygiene-maintaining functions, a common practice is to add an antimicrobial agent to these polymer materials. WO2009/026725 disclosed an antimicrobial composition, which comprises at least two antimicrobial agents having different antimicrobial mechanisms of action. Literature also discloses an antimicrobial masterbatch, which comprises the above-described antimicrobial composition and a polymer carrier. However, the above-described antimicrobial masterbatch is not desirable for making toothbrush filaments because the brush filaments made from such an antimicrobial masterbatch have a problem of discoloration or yellowing during the practical use. Meanwhile, the antimicrobial agents fail to pass the US and European food contact use requirements and can not be used for making toothbrush filaments, which are in direct contact with mouth.

WO2008/151948 also disclosed an antimicrobial polyolefin and polyester composition, which comprises one or more antimicrobial silver additives and one or more wettability additives. However, the above-described polyolefin and polyester composition is not desirable for making toothbrush filaments either, because the filaments made from such a polyolefin and polyester composition also have the problem of discoloration or yellowing during practical use, and have the problem of short durability of antimicrobial effect.

WO 01/38615 A1 relates to a monofilament synthetic fiber having antibacterial properties. The fiber consists of a polymer and a silver compound in powder form.

US 2008/051493 A1 relates to a method for coating polymer particles with antimicrobial additive materials.

EP 2 208 420 A1 relates to a silver-containing inorganic antibacterial agent.

US 5 290 544 A describes cosmetic products comprising particles of soluble glass comprising silver ions.

Therefore, there is an urgent need in the art for an antimicrobial composition, which can be used for making toothbrush filaments or cosmetic brush filaments.

### SUMMARY OF THE INVENTION

Disclosed herein is a method for preparing an antimicrobial composition, the method comprising steps in the following order: (1) mechanically pulverizing polymer resin to obtain a polymer powder, wherein the particle size D₅₀ of the polymer powder is 1-10 microns; (2) blending the polymer powder obtained in step (1) with an antimicrobial agent to obtain an antimicrobial composition, wherein the antimicrobial agent is a phosphate or a glass micropowder, loaded with silver, zinc or a silver-zinc composite.

Also disclosed herein is the antimicrobial composition prepared as described in the method above, and brush filament prepared from said composition.

### DETAILED DESCRIPTION OF THE INVENTION

As disclosed herein, the term "range" is defined by selecting a lower limit and an upper limit. The selected lower limit and upper limit define the boundaries of a specific range. All the ranges that can be defined in this way are inclusive and combinable. For example, minimum range values are defined as 1 and 2, and the maximum range values are defined as 3, 4 and 5, all of the following ranges can be expected: 1-3, 1-4, 1-5, 2-3, 2-4, and 2-5.

One aspect of this specification provides a method for preparing an antimicrobial composition, and the method comprises steps, in the following order:
(1) mechanically pulverizing a polymer to obtain a polymer powder, wherein the particle size D₅₀ of the polymer powder is 1-10 microns;
(2) blending the polymer powder obtained in step (1) with an antimicrobial agent to obtain an antimicrobial composition, wherein the antimicrobial agent is a phosphate or a glass micropowder loaded with silver, zinc or a silver-zinc composite.

In this specification, the polymer used for the antimicrobial composition is conventional. It may be any conventional polymer. In a preferred embodiment according to the present invention, the polymer is nylon (such as PA612, PA610, PA1010 and/or PA66), polyester (such as PBT, PTT, PET), or a combination of any two or more of these. Suitable polymers are available for purchase from DuPont Company, Wilmington, DE USA, such as Sorona® polymer.

Sorona® is a bio-based polymer material developed by DuPont. Its key component is produced by fermentation of agricultural crops such as corn, therefore, is bio-regenerative.

In a preferred embodiment according to this specification, the amount of the polymer accounts for 60-95% by weight, preferably 65-90% by weight, more preferably 70-90% by weight, and most preferably 80-90% by weight, based on the total weight of the composition.

In this specification, the mechanical pulverization step is conventional. It may be conventional techniques for pulverize polymer powder commonly used in the art, such as fluidized-bed jet milling, horizontal disc jet milling, circulation jet milling, opposed jet milling, impact target jet milling, ball milling, and a combination thereof.

In this specification, the particle size D₅₀ of the polymer powder is 1-10 microns, preferably 1.5-8 microns, more preferably 1.5-7 microns, and most preferably 2-5 microns.

In this specification, the antimicrobial agent is a phosphate or a glass micropowder loaded with silver, zinc or a silver-zinc composite. In this specification, the loaded amount of the silver, zinc or a silver-zinc composite. It may be any loaded amount known in the art as long as a desired antimicrobial effectiveness can be achieved. In a preferred embodiment according to this specification, the loaded amount of silver, zinc or the silver-zinc composite accounts for 0.1-5% by weight, preferably 0.2-2% by weight, and more preferably 0.3-1% by weight, based on the weight of the phosphate or the glass micropowder.

In this specification, the phosphate is conventional. It may be any phosphate antimicrobial agent commonly used. In a preferred embodiment according to this specification, the phosphate is selected from cubic crystal zirconium phosphate, lamellar zirconium phosphate, or sodium phosphate.

In this specification, the glass micropowder is any glass micropowder commonly used. In a preferred embodiment according to this specification, the average particle size of the glass micropowder is 0.1-30 microns, preferably 1-10 microns, and more preferably 2-5 microns.

In this specification, the type of glass is known. It may be any glass commonly used in the art. In a preferred embodiment according to this specification, the glass is a soluble sodium borosilicate glass.

In this specification, the antimicrobial agent may be a commercially available product, such as KHFS-Z25 manufactured by HKH National Engineering Research Center of Plastics Co., Ltd., WPA 5 manufactured by Ishizuka Glass Co., Ltd., RHA manufactured by Shanghai Runhe Nano Materials Sci. & Tech. Co., Ltd., B 6000 and B 7000 manufactured by Ciba Specialty Chemicals, and the like.

In this specification, the amount of the antimicrobial agent can be adjusted according to a particular application. In a preferred example according to this specification, the amount of the antimicrobial agent is 2-40 parts by weight, preferably 5-35 parts by weight, more preferably 6-30 parts by weight, and most preferably 10-20 by weight, based on 100 parts by weight of the polymer.

In this specification, the blending can be any process for blending polymer and inorganic additives such as, but not limited to, extrusion, banburying, open milling, and mixing, etc. In a preferred example according to this specification, the blending process is melt extrusion.

In this specification, additives may also be added into the antimicrobial agent as needed, including but not limited to, antioxidant, antistatic agent, lubricant, impact modifier, plasticizer, colorant, and filling agent.

In this specification, the antioxidant may be any suitable antioxidant commonly used. In a preferred preferred embodiment according to this specification, the antioxidant is selected from the group consisting of butylated hydroxytolune (BHT), phenyl-β-naphthylamine, alkyl para-quinone, thioether, phenyl salicylate, sulfhydryl thioether, thiopropionates, organic phosphorus compounds, dithiosulfonates, amidates, hydrazines, aromatic amines, and a combination thereof.

In this specification, the antistatic agent may be any antistatic agent commonly used in the art. In a preferred embodiment according to this specification, the antistatic agent is selected from the group consisting of quaternary ammonium salts, ethoxylated amines, aliphatic esters and sulfonated wax, and a combination thereof.

In this specification, the lubricant may be any lubricant commonly used in the art. In a preferred embodiment according to this specification, the lubricant is selected from the group consisting of aliphatic esters (for example, fatty acid monoglyceride), and a combination thereof.

In this specification, the plasticizer may be any plasticizer commonly used in the art. In a preferred embodiment according to this specification, the plasticizer is selected from the group consisting of terephthalate esters, phthalate esters, aliphatic dicarboxylate esters, phosphate esters, chlorinated paraffin wax, and a combination thereof.

In this specification, the colorant may be any colorant commonly used in the art. In a preferred example according to this specification, the colorant can by dye, pigment, colored chemicals, a combination thereof.

In this specification, the filling agent may be any filling agent, but preferably selected from the group consisting of calcium carbonate, glass fiber having a circular or non-circular cross section, glass sheet, glass bead, carbon fiber, talc powder, mica, satellite, calcined clay, calcined kaolin, diatomite, magnesium sulfate, magnesium silicate, barium sulfate, titanium dioxide, sodium aluminum carbonate, barium ferrite, potassium titanate, and a mixture thereof.

Another aspect of this specification provides an antimicrobial composition prepared with the method as described herein. The antimicrobial composition has an advantage of high antimicrobial efficiency and doesn't have the problem of discoloration.

This specification also provides a brush filament used for making toothbrushes, cosmetic brushes, paintbrushes and other brushes for consumer or industrial applications. The brush filament comprises the antimicrobial composition as described herein.

Accordingly, polymer used to form the brush filament is known. Such polymer includes, but is not limited to, nylon (such as PA612, PA610, PA1010 and/or PA66), polyester (such as PBT, PTT, PET, and/or Sorona® polymer), or a combination thereof. In a preferred embodiment according to this specification, the polymer used to form the toothbrush filament is the same as the polymer contained in the antimicrobial composition.

In this specification, the amount of the antimicrobial composition accounts for 1-20% by weight, preferably 1-15% by weight, more preferably 1-10% by weight, and most preferably 3-5% by weight, based on the total weight of the brush filament.

In this specification, the amount of the polymer used to form the brush filament is is 80-99.9% by weight, preferably 85-99.9% by weight, more preferably 90-99.9% by weight, and most preferably 95-97% by weight, based on the total weight of the brush filament.

In this specification, other additives may also be added into the brush filament as needed, including but not limited to, antioxidant, antistatic agent, lubricant, impact modifier, plasticizer, colorant, and filling agent.

In this specification, the antioxidant may be any antioxidant commonly used. Preferably, the antioxidant is selected from the group consisting of butylated hydroxytolune (BHT), phenyl-β-naphthylamine, alkyl para-quinone, thioether, phenyl salicylate, sulfhydryl thioether, thiopropionates, organic phosphorus compounds, dithiosulfonates, amidates, hydrazines, aromatic amines and a combination thereof.

In this specification, the antistatic agent is selected from the group consisting of quaternary ammonium salts, ethoxylated amines, aliphatic esters and sulfonated wax, and a combination thereof.

In this specification, the lubricant is selected from the group consisting of aliphatic esters (for example, fatty acid monoglyceride), and a combination thereof.

In this specification, the plasticizer is selected from the group consisting of terephthalate esters, phthalate esters, aliphatic dicarboxylate esters, phosphate esters, chlorinated paraffin wax, and a combination thereof.

In this specification, the colorant may be any colorant commonly used in the art. In a preferred example according to this specification, the colorant can by dye, pigment, colored chemicals, and a combination thereof.

In this specification, the filling agent may be any filling agent, but preferably selected from the group consisting of calcium carbonate, glass fiber having a circular or non-circular cross section, glass sheet, glass bead, carbon fiber, talc powder, mica, satellite, calcined clay, calcined kaolin, diatomite, magnesium sulfate, magnesium silicate, barium sulfate, titanium dioxide, sodium aluminum carbonate, barium ferrite, potassium titanate, and a mixture thereof.

In this specification, the method to form the brush filament is conventional. In a preferred embodiment according to this specification, the process for making the filament includes solution spinning, melt spinning, dry spinning, wet spinning, and the like.

In this specification, there are no particular restrictions to the cross sectional shape of the brush filament as long as it can be used for particular tools such as toothbrushes, painting brushes, cosmetic brushes, brush pens, paintbrushes, and the like. Typically, the cross section of the brush filament is a circle, an ellipse, a square, a rectangle, a triangle, a diamond, and the like.

In this specification, the brush filament may be flat-ended, or sharp-ended at one or both ends.

In a preferred embodiment according to this specification, the brush filament comprises PBT and a clay additive, and the brush filament has an appearance of ordinary brush filament or a wave-shaped appearance, which was made by conventional process. In a preferred embodiment according to this specification, one end or both ends of the brush filament are chemically tipped. The chemical tipping process is conventional in the art. Those of ordinary skill in the art can directly know how to tip one end or both ends of the brush filament according to the description of the present invention in combination with his professional knowledge. In another preferred embodiment according to this specification, reference is made to the tipping processes disclosed in U.S. Nos. 6,764,142 B2 and 6,090,488. In a preferred embodiment according to this specification, the brush filament includes PET, nylon 6, nylon 66, nylon 610, nylon 612, nylon 11, thermoplastic elastomers (such as thermoplastic polyester polyether elastomers, for example, Hytrel® thermoplastic elastomer, available from DuPont Company, Wilmington, DE USA, and thermoplastic vulcanizates, for example, EPTV, also available from DuPont Company), and a combination thereof.

This specification also provides an antimicrobial filament comprising an antimicrobial agent, wherein the antimicrobial agent is a phosphate or a glass micropowder loaded with silver, zinc or a silver-zinc composite, and the antimicrobial effect of the antimicrobial filament is above 99%.

In a preferred embodiment according to this specification, the antimicrobial agent is the same as the said one in front part of this specification.

In a preferred embodiment according to this specification, the antimicrobial filament includes polymer such as, but not limited to, PET, nylon 6, nylon 66, nylon 610, nylon 612, nylon 11, thermoplastic elastomers (such as thermoplastic polyester polyether elastomers, for example, Hytrel purchased from DuPont, and thermoplastic vulcanizates, for example, EPTV purchased from DuPont), and a combination thereof.

In a preferred embodiment of the present specification, the antimicrobial filament meets requirement for food contact applications, preferably, meets requirement of FDA and/or EPA requirements for food contact use.

In this specification, unless otherwise specified, the antimicrobial effect refers to overall antimicrobial effect against fungi and bacteria. In a preferred embodiment according to this specification, the antimicrobial effect is tested in accordance with ASTM E 2149-2001. In another preferred embodiment according to this specification, the antimicrobial effect is tested against *Staphylococcus aureus*, *Escherichia coli* and *Candida albicans.*

In a preferred embodiment according to this specification, the antimicrobial effect of the antimicrobial filament is above 99%, preferably 99-99.99%.

In a preferred embodiment according to this specification, the yellowness index of the antimicrobial composition is less than or equal to 40, preferably less than or equal to 30, more preferably less than or equal to 25, and most preferably 10-25.

In a preferred embodiment according to this specification, the antimicrobial filament is made from the antimicrobial composition prepared with the method as described herein.

In this specification, the brush filaments can be used for making various types of brushes, toothbrushes, cosmetic brushes, paintbrushes and other brushes for civilian or industrial applications.

The present invention is further illustrated in detail by the following examples, in which all the units are percentage by weight. These examples are provided for illustration purposes and in no way limit the scope of the present invention.

### EXAMPLES

### Test methods:

The yellowness index (YI) was measured with a HunterLab spectrophotometer (LabScan XE, purchased from Eutin Holdings).

### Example 1: Preparation of an antimicrobial composition

20 kg of nylon 612 (purchased from DuPont) was sliced and pulverized into powder (particle size D₅₀ = 3 microns) with a mechanical mill (JCW616 ultra-fine hammer mill of Shanghai Xichuang Powder Equipment Co., Ltd., 3000 rpm). Then, 2 kg of antimicrobial powder KHFS-Z25 manufactured by HKH National Engineering Research Center of Plastics Co., Ltd, China. was added to the above-described powder, and was mixed in a mixer (SFS 100, purchased from KAYATA, China at ambient temperature. The resulted mixed antimicrobial powder was blended and pelletized with a twin screw extruder (ZSK 70, W&P) to obtain a white homogeneous antimicrobial composition. The blending temperature was 230-250 °C. The yellowness index of the obtained antimicrobial composition was 10.

### Example 2

The antimicrobial composition obtained in Example 1 was added into nylon 612 chips according to a ratio of 5% by weight, and mixed in a mixer (SFS 100, purchased from KAYATA, China). Then, the resulted mixture was melt-spun at 220-240 °C directly through a single screw extruder (SJ 30 of Donglong Plastics Machinery Co., Ltd. , China). An antimicrobial filament was obtained after cooling, stretching and heat-setting. Antimicrobial tests were performed on the obtained antimicrobial filament with the "Shake Flask Method" (ASTM E2149-2001) against *Staphylococcus aureus*, *Escherichia coli* and *Candida albicans.* The antimicrobial efficiency reached 99.99% with respect to these bacteria.

### Comparative Example 1

The antimicrobial composition was prepared with substantially the same method as in Example 1 except that the mechanical pulverizing step was omitted. The yellowness index of the obtained antimicrobial composition was 50. An antimicrobial filament was obtained from the above-prepared antimicrobial composition with the same method as in Example 2. Antimicrobial tests were performed on the obtained antimicrobial filament with the "Shake Flask Method" (ASTM E2149-2001) against *Staphylococcus aureus, Escherichia coli* and *Candida albicans.* The antimicrobial efficiency was 94%, 94% and 73%, respectively.

### Example 3: Preparation of an antimicrobial composition

10 kg of Sorona® (manufactured by DuPont) was sliced and pulverized into powder (particle size D₅₀ = 2 microns) with a mechanical mill (JCW616 ultra-fine hammer mill of Shanghai Xichuang Powder Equipment Co., Ltd., 3000 rpm). Then, 2 kg of antimicrobial powder B 7000 of glass powder of Ciba Specialty Chemicals, China was added to the above-described powder, and was mixed in a mixer (SFS 100, purchased from KAYATA, China) at ambient temperature. The resulted mixed antimicrobial powder was blended and pelletized with a twin screw extruder (ZSK 70, W&P) to obtain a white homogeneous antimicrobial composition. The blending temperature was 250-260 °C. The yellow index of the obtained antimicrobial composition was 25.

### Example 4

The antimicrobial composition obtained in Example 3 was added into Sorona® polymer pellets according to a ratio of 3% by weight, and mixed in a mixer (SFS 100, purchased from KAYATA). Then, the resulted mixture was melt-spun at 250-270 °C directly through a single screw extruder (SJ 30 of Donglong Plastics Machinery Co., Ltd., China). An antimicrobial filament was obtained after cooling, stretching and heat-setting. Antimicrobial tests were performed on the obtained antimicrobial filament with the "Shake Flask Method" (ASTM E2149-2001) against *Staphylococcus aureus*, *Escherichia coli* and *Candida albicans.* The antimicrobial efficacy reached 99.99% with respect to all the bacteria.

### Comparative Example 2

The antimicrobial composition was prepared with substantially the same method as in Example 3 except that the mechanical pulverizing step was omitted. The yellowness index of the obtained antimicrobial composition was 64. An antimicrobial filament was obtained from the above-prepared antimicrobial composition with the same method as in Example 4. Antimicrobial tests were performed on the obtained antimicrobial filament with the "Shake Flask Method" (ASTM E2149-2001) against *Staphylococcus aureus*, *Escherichia coli* and *Candida albicans.* The antimicrobial efficacy was 90%, 90% and 25%, respectively.

### Example 5: Preparation of an antimicrobial composition

25 kg of nylon 1010 (supplied by DuPont Xingda Filaments Co., Ltd. in Wuxi) was sliced and pulverized into powder (particle size D₅₀ = 5 microns) with a mechanical mill (JCW616 ultra-fine hammer mill of Shanghai Xichuang Powder Equipment Co., Ltd., 3000 rpm). Then, 5 kg of antimicrobial powder RHA of Shanghai Runhe Nano Materials Sci. & Tech. Co., Ltd. was added to the above-described powder, and was mixed in a mixer (SFS 100, purchased from KAYATA) at ambient temperature. The resulted mixed antimicrobial powder was blended and pelletized with a twin screw extruder (ZSK 70, W&P) to obtain a white homogeneous antimicrobial composition. The blending temperature was 230-250 °C. The yellow index of the obtained antimicrobial composition was 19.

### Example 6

The antimicrobial composition obtained in Example 5 was added into nylon 1010 chips according to a ratio of 3% by weight, and mixed in a mixer (SFS 100, purchased from KAYATA). Then, the resulted mixture was melt-spun at 220-280 °C directly through a single screw extruder (SJ 30 of Donglong Plastics Machinery Co., Ltd.). An antimicrobial filament was obtained after cooling, stretching and heat-setting. Antimicrobial tests were performed on the obtained antimicrobial filament with the "Shake Flask Method" (ASTM E2149-2001) against *Staphylococcus aureus*, *Escherichia coli* and *Candida albicans.* The antimicrobial efficacy reached 99.7% with respect to all the bacteria.

### Comparative Example 3

The antimicrobial composition was prepared with substantially the same method as in Example 5 except that the mechanical pulverizing step was omitted. The yellowness index of the obtained antimicrobial composition was 60. An antimicrobial filament was obtained from the above-prepared antimicrobial composition with the same method as in Example 6. Antimicrobial tests were performed on the obtained antimicrobial filament with the "Shake Flask Method" (ASTM E2149-2001) against *Staphylococcus aureus*, *Escherichia coli* and *Candida albicans.* The antimicrobial efficiency was 99%, 99% and 70%, respectively.

**Table 1. Summary of antimicrobial composition, antimicrobial filaments and preparation method**

| | | | | | **Loading in Filament** | **Bio-efficacy** | | |
|---|---|---|---|---|---|---|---|---|
| **Example** | **Polymer** | **Antimicrobial Agent** | **Processing** | **YI** | | ***S**. **aureus*** | ***E**. **coli*** | ***Candida albicans*** |
| 1,2 | PA 612 | KHFS-Z25, glass | pulverizing | 10 | 5% | > 99.99% | > 99.99% | > 99.99% |
| Comparative 1 | PA 612 | KHFS-Z25, glass | none | 50 | 5% | 94% | 94% | 73% |
| 3,4 | PTT | B 7000, glass | pulverizing | 25 | 3% | > 99.99% | > 99.99% | > 99.99% |
| Comparative 2 | PTT | B 7000, glass | none | 64 | 3% | 90% | 90% | 25% |
| 5,6 | PA1010 | RHA, phosphate | pulverizing | 19 | 3% | 99.70% | 99.70% | 99.70% |
| Comparative 3 | PA1010 | RHA, phosphate | none | 60 | 3% | 99% | 99% | 70% |

| | | | | | | | | |
|---|---|---|---|---|---|---|---|---|
| YI is the measure of yellowness index. | | | | | | | | |

## Claims

1. A method for preparing an antimicrobial composition, the method comprising steps in the following order:
(1) mechanically pulverizing a polymer to obtain a polymer powder, wherein the particle size D₅₀ of the polymer powder is 1-10 microns;
(2) blending the polymer powder obtained in step (1) with an antimicrobial agent to obtain an antimicrobial composition, wherein the antimicrobial agent is a phosphate or a glass micropowder, loaded with silver, zinc or a silver-zinc composite.

2. The method as described in claim 1, wherein the polymer is nylon, polyester, or a combination thereof.

3. The method as described in claim 1 or 2, wherein the mechanical pulverizing step is carried out by fluidized-bed jet milling, horizontal disc jet milling, circulation jet milling, opposed jet milling, impact target jet milling, ball milling, or a combination thereof.

4. The method as described in claim 1, 2, or 3, wherein the loaded amount of silver, zinc or the silver-zinc composite accounts for 0.1-5% by weight based on the weight of the phosphate or the glass micropowder.

5. The method as described in claim 1, 2, 3, or 4, wherein the phosphate is selected from the group consisting of cubic crystal zirconium phosphate, lamellar zirconium phosphate and sodium phosphate.

6. The method as described in any one of claims 1 to 5, wherein the average particle size of glass micropowder is 0.1-30 microns.

7. The method as described in any one of claims 1 to 6, wherein the amount of the antimicrobial agent is 2-40 parts by weight, based on 100 parts by weight of the polymer.

8. An antimicrobial composition prepared using the method of any one of claims 1 to 7.

9. A brush filament comprising the antimicrobial composition as described in claim 8.

10. The brush filament of claim 9, wherein the brush filament comprises PBT and a clay additive and come with a wave-shaped appearance.

11. The brush filament as described in claim 10, wherein one end or both ends of the brush filament are chemically tipped.

12. The brush filament as described in claim 9, 10, or 11, wherein the brush filament comprises a polymer, said polymer is a nylon selected from the group consisting of, nylon 6, nylon 66, nylon 610, nylon 612, and nylon 11; a polyester selected from the group consisting of polyethylene terephthalate, polytrimethylene terephthalate, polybutylene terephthalate, and a combination thereof.

## Patentansprüche

1. Verfahren für die Herstellung einer antimikrobiellen Zusammensetzung, wobei das Verfahren Schritte in der folgenden Reihenfolge umfasst:
(1) mechanisches Pulverisieren eines Polymers, um ein Polymerpulver zu erhalten, wobei die Teilchengröße D₅₀ des Polymerpulvers 1-10 Mikron beträgt;
(2) Abmischen des in Schritt (1) erhaltenen Polymerpulvers mit einem antimikrobiellen Mittel, um eine antimikrobielle Zusammensetzung zu erhalten, wobei das antimikrobielle Mittel ein Phosphat oder ein Glasmikropulver ist, das mit Silber, Zink oder einem Silber-Zink-Verbundstoff beladen ist.

2. Verfahren wie in Anspruch 1 beschrieben, wobei das Polymer Nylon, Polyester oder eine Kombination davon ist.

3. Verfahren wie in Anspruch 1 oder 2 beschrieben, wobei der mechanische Pulverisierungsschritt durch Mahlen in einer Fließbett-Strahlmühle, horizontalen Scheibenstrahlmühle, Umlaufstrahlmühle, Gegenstrahlmühle, Prallstrahlmühle, Kugelmühle oder einer Kombination davon durchgeführt wird.

4. Verfahren wie in Anspruch 1, 2 oder 3 beschrieben, wobei die geladene Menge Silber, Zink oder Silber-Zink-Verbundstoff 0,1-5 Gew.-%, auf das Gewicht des Phosphat oder des Glasmikropulvers bezogen, ausmacht.

5. Verfahren wie in Anspruch 1, 2, 3, oder 4 beschrieben, wobei das Phosphat aus der Gruppe ausgewählt ist bestehend aus kubischem kristallinem Zirconiumphosphat, laminarem Zirconiumphosphat und Natriumphosphat.

6. Verfahren wie in einem der Ansprüche 1 bis 5 beschrieben, wobei die durchschnittliche Teilchengröße von Glasmikropulver 0,1-30 Mikron beträgt.

7. Verfahren wie in einem der Ansprüche 1 bis 6 beschrieben, wobei die Menge des antimikrobiellen Mittels 2-40 Gewichtsteile, auf 100 Gewichtsteile des Polymers bezogen, beträgt.

8. Antimikrobielle Zusammensetzung, die unter Anwendung des Verfahrens nach einem der Ansprüche 1 bis 7 hergestellt wird.

9. Borstenfilament, das die antimikrobielle Zusammensetzung, wie sie in Anspruch 8 beschrieben ist, umfasst.

10. Borstenfilament nach Anspruch 9, wobei das Borstenfilament PBT und ein Tonzusatzmittel umfasst und ein wellenförmiges Aussehen aufweist.

11. Borstenfilament wie in Anspruch 10 beschrieben, wobei ein Ende oder beide Enden des Borstenfilaments chemisch bestückt ist/sind.

12. Borstenfilament wie in Anspruch 9, 10 oder 11 beschrieben, wobei das Borstenfilament ein Polymer umfasst, wobei das Polymer ein Nylon ist ausgewählt aus der Gruppe bestehend aus Nylon 6, Nylon 66, Nylon 610, Nylon 612 und Nylon 11;
einem Polyester ausgewählt aus der Gruppe bestehend aus Polyethylenterephthalat, Polytrimethylenterephthalat, Polybutylenterephthalat und einer Kombination davon.

## Revendications

1. Procédé de préparation d'une composition antimicrobienne, le procédé comprenant les étapes dans l'ordre suivant:
(1) pulvérisation mécanique d'un polymère pour obtenir une poudre de polymère, dans lequel la D₅₀ des tailles des particules de la poudre de polymère est de 1 à 10 microns;
(2) mélange de la poudre de polymère obtenue dans l'étape (1) avec un agent antimicrobien pour obtenir une composition antimicrobienne, dans lequel l'agent antimicrobien est un phosphate ou une micropoudre de verre, chargé(e) d'argent, de zinc ou d'un composite d'argent-zinc.

2. Procédé tel que décrit selon la revendication 1, dans lequel le polymère est le nylon, le polyester, ou une combinaison de ceux-ci.

3. Procédé tel que décrit selon la revendication 1 ou 2, dans lequel l'étape de pulvérisation mécanique est conduite par broyage par jet sur lit fluidisé, broyage par jet sur disque horizontal, broyage par jet circulant, broyage par jets opposés, fragmentation par jet à impact sur cible, broyage à boulets, ou une combinaison de ceux-ci.

4. Procédé tel que décrit selon la revendication 1, 2, ou 3, dans lequel la quantité chargée d'argent, de zinc ou du composite d'argent-zinc s'élève à 0,1 à 5 % en poids sur la base du poids du phosphate ou de la micropoudre de verre.

5. Procédé tel que décrit selon la revendication 1, 2, 3, ou 4, dans lequel le phosphate est sélectionné parmi le groupe constitué du phosphate de zirconium à cristaux cubiques, du phosphate de zirconium lamellaire et du phosphate de sodium.

6. Procédé tel que décrit selon l'une quelconque des revendications 1 à 5, dans lequel la taille moyenne de particule de la micropoudre de verre est de 0,1 à 30 micron(s).

7. Procédé tel que décrit selon l'une quelconque des revendications 1 à 6, dans lequel la quantité de l'agent antimicrobien est de 2 à 40 parties en poids, sur la base de 100 parties en poids du polymère.

8. Composition antimicrobienne préparée en utilisant le procédé selon l'une quelconque des revendications 1 à 7.

9. Filament de brosse comprenant la composition antimicrobienne telle que décrite selon la revendication 8.

10. Filament de brosse selon la revendication 9, dans lequel le filament de brosse comprend du PBT et un additif type argile et est proposé avec une apparence ondulée.

11. Filament de brosse tel que décrit selon la revendication 10, dans lequel une extrémité ou les deux extrémités du filament de brosse est/sont chimiquement épointée(s).

12. Filament de brosse tel que décrit selon la revendication 9, 10, ou 11, dans lequel le filament de brosse comprend un polymère, ledit polymère est un nylon sélectionné parmi le groupe constitué du, nylon 6, nylon 66, nylon 610, nylon 612, et nylon 11; un polyester sélectionné parmi le groupe constitué du poly(téréphtalate d'éthylène), du poly(téréphtalate de triméthylène), du poly(téréphtalate de butylène), et d'une combinaison de ceux-ci.
